# EUROPÄISCHE PATENTSCHRIFT

(11) **EP 2 072 358 B1**
(45) Veröffentlichungstag und Bekanntmachung des Hinweises auf die Patenterteilung: **25.02.2015**
(21) Anmeldenummer: 08105631.9
(22) Anmeldetag: 22.10.2008
(51) Int. Cl.: B60S 1/24, B60S 1/34, B60S 1/04

(54) **Wischerlager**
Wiper bearing
Palier d'essuie-glace

(30) Priorität: 19.12.2007 DE 102007061102
(43) Veröffentlichungstag der Anmeldung: 24.06.2009
(73) Patentinhaber: ROBERT BOSCH GMBH, 70442 Stuttgart (DE)
(72) Erfinder: Wickermann, Hans, 77815, Buehl (DE); Dietrich, Jan, 77815, Buehl (DE); Lind, Eugen, 77731, Willstaett (DE); Koehn, Swen, 76135, Karlsruhe (DE)

(56) Entgegenhaltungen:
- WO-A1-2007/144069
- DE-A1- 19 851 881
- DE-A1-102004 005 065
- FR-A1- 2 774 340
- US-A1- 2004 123 413
- US-B1- 6 845 540

## Beschreibung

### Stand der Technik

Die Erfindung betrifft ein Wischerlager gemäß dem Oberbegriff des Anspruchs 1 sowie ein Montageverfahren für ein Wischerlager gemäß dem Oberbegriff des Anspruchs 7.

Bei einigen bekannten Wischanlagen ist es aufgrund der beengten Einbauraumverhältnisse nicht vermeidbar, dass eine zusammen mit einer Lagerwelle eine Antriebskurbel bildende Lagerplatte oberhalb eines Lagergehäuses angeordnet ist, welches von der Lagerwelle durchsetzt ist. Die Lagerplatte ist durch Ring-Verstemmen mit der Lagerwelle verbunden, so dass die Verbindung aus Lagerplatte und Lagerwelle ausreichend große Drehmomente und Axialkräfte übertragen kann. Nachteilig bei derartigen bekannten Wischerlagern mit oben angeordneter Lagerplatte ist es, dass die Lagerwelle im Falle eines Crashs trotz der auf die Ankerwelle wirkenden großen Axialkräfte praktisch nicht durch das Lagergehäuse hindurch verstellt werden kann. Hiervon geht eine Gefahr für bei einem Crash beteiligte Personen aus. Um diese Gefahr zu minimieren, ist es bekannt, das Lagergehäuse mit Sollbruchstellen zu versehen. Nachteilig hierbei ist jedoch, dass die Kräfte, die auftreten müssen, bis derartige Sollbruchstellen im Lagergehäuse brechen sehr groß sind und der benötigte Kraftbetrag in einem großen Bereich streut.

Ein Wischerlager mit den Merkmalen des Oberbegriffs des Anspruchs 1 ist aus der US 6,845,540 B1 bekannt.

### Offenbarung der Erfindung

### Technische Aufgabe

Der Erfindung liegt die Aufgabe zugrunde, ein Wischerlager mit oben liegender Lagerplatte vorzuschlagen, das derart ausgebildet ist, dass die von ihm ausgehende Verletzungsgefahr im Falle eines Crashs minimiert ist. Ferner besteht die Aufgabe darin, ein Montageverfahren für ein derartiges Wischerlager vorzuschlagen.

### Technische Lösung

Diese Aufgabe wird hinsichtlich des Wischerlagers mit den Merkmalen des Anspruchs 1 und hinsichtlich des Montageverfahrens mit den Merkmalen des Anspruchs 7 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt der Gedanke zugrunde, den drehfest mit der Lagerplatte verbundenen, einen Befestigungsbereich zum Festlegen eines Wischerarms aufweisenden oberen Abschnitt der Lagerwelle mithilfe von Sicherungsmitteln gegen eine axiale Relativbewegung zur Lagerplatte in Richtung des Lagergehäuses zu sichern, wobei die Sicherungsmittel erfindungsgemäß derart auszubilden und/oder anzuordnen sind, dass diese bei Überschreiten einer vorgegebenen, d. h. definierten, maximalen auf die Lagerwelle wirkenden Axialkraft ihre Sicherungswirkung verlieren und folglich eine relative Axialbewegung des oberen Abschnitts der Lagerwelle zur Lagerplatte in Richtung des Lagergehäuses ermöglichen, wodurch der obere Abschnitt der Lagerwelle, zumindest abschnittsweise, vorzugsweise vollständig, in das unterhalb der Lagerplatte angeordnete Lagergehäuse abtauchen oder durch dieses hindurch tauchen kann, so dass von dem oberen Abschnitt der Lagerwelle keine Verletzungsgefahr für bei einem Crash beteiligte Personen mehr ausgeht. Anders ausgedrückt ist der obere Abschnitt der Lagerwelle gemäß der Erfindung nicht mehr, oder nicht ausschließlich mehr, aufgrund der drehfesten Verbindung zwischen der Lagerplatte und dem oberen Abschnitt der Lagerwelle in axialer Richtung gesichert, sondern durch von der drehfesten Verbindung zwischen Lagerwelle und Lagerplatte separaten Sicherungsmitteln, die derart dimensioniert und/oder angeordnet sind, dass sie bei Überschreiten einer definierten Axialkraft eine Axialbewegung der Lagerwelle relativ zu dem Lagergehäuse nach unten zulassen.

In Weiterbildung der Erfindung ist mit Vorteil vorgesehen, dass ein unterer, unten aus dem Lagergehäuse herausragender Abschnitt der Lagerwelle mithilfe von weiteren Sicherungsmitteln gegen eine axiale Relativbewegung in Richtung des Lagergehäuses gesichert ist. Diese Sicherungsmittel können beispielsweise als in einer Nut des unteren Abschnitts der Lagerwelle aufgenommener Sicherungsring ausgebildet sein.

Von besonderem Vorteil ist eine Ausführungsform der Erfindung, bei der die Sicherungsmittel, die den oberen Abschnitt der Lagerwelle gegen eine axiale Relativbewegung zu der Lagerplatte in Richtung des Lagergehäuses sichern, in einem Bereich axial zwischen dem Befestigungsbereich, zum Festlegen des Wischerarms, beispielsweise einem Rändelbereich, und der Lagerplatte angeordnet sind, bevorzugt derart, dass sich die Sicherungsmittel in axialer Richtung an der Lagerplatte abstützen.

Im Hinblick auf die konkrete Ausbildung und Anordnung der eine Axialbewegung der Lagerwelle zu dem Lagergehäuse bei Überschreiten einer definierten Kraft zulassenden Sicherungsmittel gibt es unterschiedlichste Möglichkeiten. Es offenbart eine nicht beanspruchte Ausführungsform der Sicherungsmittel, bei der diese einen Sicherungsring umfassen, der in einer Umfangsnut des oberen Abschnitts der Lagerwelle gehalten ist. Bevorzugt stützt sich der Sicherungsring mit seiner der Lagerplatte zugewandten Stirnseite an dieser ab. Um eine Freigabe der Axialbewegung bei Überschreiten einer maximalen Axialkraft zu ermöglichen, ist gemäß der Weiterbildung der Erfindung vorgesehen, dass eine obere Umfangsnutwand zumindest abschnittsweise abgeschrägt ausgebildet ist, also winklig zu einer senkrecht zur Längsmittelachse der Lagerwelle angeordneten Ebene verläuft, so dass der Sicherungsring bei Überschreiten der maximalen Axialkraft nach radial außen verstellt wird und somit eine relative Verstellbewegung der Lagerwelle zur Lagerplatte möglich ist. Durch die Wahl des Winkels, unter dem die Umfangsnut zu der genannten Ebene geneigt ist, kann die Größe der Axialkraft definiert vorgegeben werden, die überschritten werden muss, bis die Sicherungsmittel die Axialbewegung freigeben. Zusätzlich oder alternativ zu dem Vorsehen einer abgeschrägten Umfangswand kann auch der Sicherungsring eine der oberen Umfangswand zugewandte, abgeschrägte Seitenwand aufweisen.

Nach der Erfindung umfassen die Sicherungsmittel einen Bolzen oder eine Speednut. Diese Bauteile sind mit mindestens einer Sollbruchstelle versehen, die bricht, wenn eine definierte Axialkraft überschritten wird. Der Bolzen ist bevorzugt derart angeordnet, dass dieser senkrecht zur Lagerwellenlängsmittelachse verläuft und die Lagerwelle durchsetzt, wobei sich der Bolzen mit beiden Endbereichen auf der Lagerplatte abstützt. Das Vorsehen eines Bolzens eignet sich insbesondere für Anwendungen, bei denen vergleichsweise große Axialkräfte gehalten werden sollen.

Um ein Auflager für die Lagerplatte bereitzustellen und im Falle des Nachgebens der Sicherungsmittel ein problemloses Bewegen des oberen Abschnitts relativ zu dem Lagergehäuse in Richtung des Lagergehäuses zu ermöglichen, ist nach der Erfindung vorgesehen, dass die Lagerwelle eine Durchmesserstufe aufweist, wobei die Lagerplatte mit Vorteil auf der Durchmesserstufe aufliegt. Anders ausgedrückt ist der Durchmesser des oberen Abschnitts der Lagerwelle zumindest abschnittsweise geringer als der Durchmesser der Lagerwelle innerhalb des Lagergehäuses.

Besonders bevorzugt ist eine Ausführungsform des Wischerlagers, bei der die Lagerplatte, vorzugsweise mit Nullspiel, formschlüssig mit dem oberen Abschnitt der Lagerwelle drehfest verbunden ist. Besonders vorteilhaft ist dabei eine Ausführungsform, bei der die formschlüssige Verbindung derart ausgebildet ist, dass, zumindest näherungsweise, keine reibschlüssige Verbindung in axialer Richtung realisiert ist.

Bevorzugt ist die formschlüssige Verbindung derart ausgebildet, dass diese zwar Kräfte in Umfangsrichtung, d.h. Drehmomente, übertragen kann, dass die formschlüssige Verbindung jedoch einer axialen Verstellbewegung des oberen Abschnitts der Lagerwelle in Richtung des Lagergehäuses keine entgegenwirkenden Haltekräfte verursacht. Dies kann insbesondere dadurch realisiert werden, dass die Lagerplatte zunächst auf die Lagerwelle gepresst und damit formschlüssig sowie reibschlüssig mit dieser verbunden wird. Daraufhin erfolgt ein Lösevorgang, bei dem die Lagerplatte wieder von der Lagerplatte gelöst wird, woraufhin eine erneute Montage der Lagerplatte auf der Lagerwelle, insbesondere mit Nullspiel in Umfangsrichtung, erfolgt. Durch das Lösen der Lagerplatte entsteht in der Lagerplatte ein genaues Abbild der Lagerwelle (beispielsweise Zweikant, Vierkant, Längs-Rändel oder Konus-Rändel), also eine formkongruent ausgebildete Innenkontur, so dass, trotz der Gewährleistung einer spielfreien Verbindung, eine axial nicht sichernde Verbindung hergestellt ist, mit der Folge, dass ausschließlich die Sicherungsmittel (und nicht die Verbindung Lagerplatte - Lagerwelle) den oberen Abschnitt der Lagerwelle davon abhalten, sich in Richtung des Lagergehäuses axial zu verstellen.

Um eine Drehmomentübertragung zwischen Lagerplatte und Lagerwelle zu ermöglichen, ist in Weiterbildung der Erfindung vorgesehen, dass die formschlüssige Verbindung zwischen der Lagerplatte und der Lagerwelle einen Mehrkantabschnitt, beispielsweise einen Zweitkant-, Vierkant- oder Sechskantabschnitt, etc. und/oder einen Rändelabschnitt am oberen Abschnitt der Lagerwelle umfasst, wobei dieser mehrkantige und/oder gerändelte Abschnitt mit einer formkongruent konturierten Durchgangsöffnung der Lagerplatte drehmomentübertragend zusammenwirkt. Dabei ist eine Ausführungsform bevorzugt, bei der das exakte formkongruente Abbild des Lagerwellenabschnitts am Innenumfang der Lagerplattendurchgangsöffnung zunächst durch einen Aufpressvorgang der Lagerplatte auf die Lagerwelle erzeugt oder optimiert wird, wobei zur Vermeidung von in axialer Richtung wirkenden Kräften die Verbindung aus Lagerplatte und Lagerwelle daraufhin wieder gelöst wird, woraufhin die Lagerplatte erneut auf die Lagerwelle montiert, insbesondere aufgesteckt, wird.

Damit gewährleistet ist, dass sich die Lagerplatte ausreichend an der Lagerwelle abstützen kann, ist in Weiterbildung der Erfindung mit Vorteil vorgesehen, dass der Mehrkantabschnitt oder der Rändelabschnitt der formschlüssigen Verbindung, also ein Teilbereich des oberen Abschnitts der Lagerwelle, sich in Richtung des oberen Endes der Lagerwelle verjüngend (abnehmender Durchmesser) ausgebildet ist.

Neben dem zuvor beschriebenen Wischerlager führt die Erfindung auch auf ein Montageverfahren zur Montage eines zuvor beschriebenen Wischerlagers. Kern des erfindungsgemäßen Verfahrens ist es, dass der obere Abschnitt der Lagerwelle bei der Montage mit Sicherungsmitteln gegen eine axiale Relativbewegung zur Lagerplatte in Richtung des Lagergehäuses gesichert wird, wobei die Sicherungsmittel derart ausgebildet und/oder angeordnet werden, dass diese bei Überschreiten einer vorgegebenen, d. h. definierten maximalen auf die Lagerwelle wirkenden, Axialkraft eine Relativbewegung des oberen Abschnitts der Lagerwelle in Richtung des Lagergehäuses ermöglichen.

Bevorzugt wird bei der Montage der Lagerplatte an der Lagerwelle derart vorgegangen, dass die formschlüssige Verbindung zwischen der Lagerplatte und der Lagerwelle einer Verstellbewegung des oberen Abschnitts der Lagerwelle in Richtung des Lagergehäuses keine Haltekräfte entgegensetzt. Dies kann beispielsweise dadurch erreicht werden, dass die Lagerplatte zunächst auf den oberen Abschnitt, insbesondere auf einen Mehrkantabschnitt oder einen gerändelten Abschnitt, der Lagerwelle aufgepresst wird, woraufhin die Lagerplatte wieder von dem oberen Abschnitt der Lagerwelle gelöst und dann erneut montiert, insbesondere mit Nullspiel aufgesteckt, wird.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: ein Wischerlager, umfassend eine Lagerwelle, eine Lagerplatte sowie ein Lagergehäuse,
- Fig. 2:: eine mögliche Ausgestaltung einer Innenkontur einer Durchgangsöffnung der Lagerplatte,
- Fig. 3:: eine mögliche Ausgestaltung der Lagerwelle zum formschlüssigen Verbinden mit einer Lagerplatte,
- Fig. 4:: eine alternative Ausgestaltungsform der Lagerwelle mit einer Zweikantkontur,
- Fig. 5:: ein weiteres Ausführungsbeispiel, das eine alternative Ausgestaltungsmöglichkeit der Lagerwelle zeigt,
- Fig. 6:: ein weiteres Ausführungsbeispiel einer Lagerwelle mit Rändelabschnitt,
- Fig. 7:: eine mögliche Ausbildung von Sicherungsmitteln als Sicherungsring und
- Fig. 8:: eine mögliche Ausbildung von Sicherungsmitteln als in Querrichtung zur Längserstreckung der Lagerwelle verlaufender Bolzen.

### Ausführungsformen der Erfindung

In den Figuren sind gleiche Bauteile und Bauteile mit der gleichen Funktion mit den gleichen Bezugszeichen gekennzeichnet.

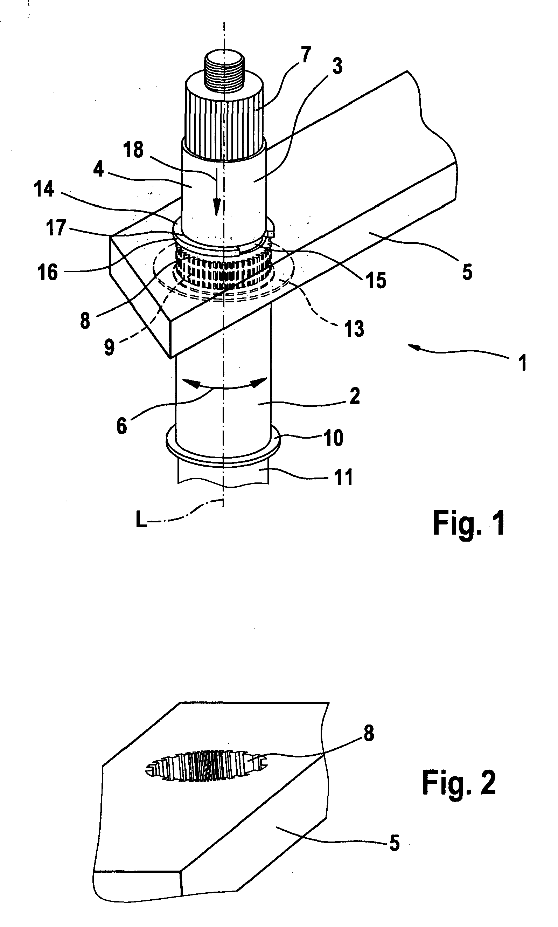

In Fig. 1 ist ein Wischerlager 1 für eine ansonsten bekannte Wischeranlage eines Kraftfahrzeugs gezeigt. Das Wischerlager 1 umfasst ein Lagergehäuse 2, in dem eine Lagerwelle 3 drehbar gelagert ist, wobei die Lagerwelle 3 das hülsenförmige Lagergehäuse 2 in beide Axialrichtungen durchsetzt. Drehfest mit einem oberen, oberhalb des Lagergehäuses 2 angeordneten Abschnitt 4 der Lagerwelle 3 ist eine Lagerplatte 5 verbunden, die über ein nicht gezeigtes, von der Lagerwelle 3 beabstandetes Gelenk mit einem ebenfalls nicht gezeigten, an sich bekannten Gestänge verbunden ist, wobei das von einem Elektromotor angetriebene Gestänge die Kurbelplatte 5 pendelnd in den Pfeilrichtungen 6 hin- und herbewegt, wobei diese pendelnde Bewegung aufgrund der formschlüssigen Verbindung zwischen der Lagerplatte 5 und der Lagerwelle 3 auf letztere übertragen wird. Drehfest mit einem gerändelten Befestigungsbereich 7 der Lagerwelle 3 ist im fertig montierten Zustand ein Wischerarm verbunden, der sich aufgrund der oszillierenden Hin- und Herbewegung der Lagerwelle 3 mit einem Wischgummi auf einer Fensterscheibe in einem Wischbereich hin- und herbewegt wird.

Wie aus Fig. 1 zu erkennen ist, durchsetzt der obere Abschnitt 4 der Lagerwelle 3 eine Durchgangsöffnung 8 in der Lagerplatte 5, wobei die Längsmittelachse der Durchgangsöffnung 8 senkrecht zur Längserstreckung der Lagerplatte 5 verläuft. Die Lagerplatte 5 ist formschlüssig mit der Lagerwelle 3 verbunden, wobei der Formschluss durch einen Rändelabschnitt 9 am Außenumfang des oberen Abschnitts 4 bewirkt wird, der mit der formkongruent konturierten Durchgangsöffnung 8 (vergleiche Fig. 2) drehmomentübertragend zusammenwirkt. Die formschlüssige Verbindung zwischen der Lagerplatte 5 und der Lagerwelle 3 ist derart ausgebildet, dass mit dieser nur Drehmomente in Umfangsrichtung, nicht jedoch Axialkräfte übertragen werden können. Hierzu wird die Lagerplatte 5 zunächst auf den Rändelabschnitt 9 mit seinen parallel zur Längsmittelachse L der Lagerwelle 3 verlaufenden Rändelung aufgepresst, so dass ein exaktes Abbild des Rändelabschnitts 9 am Innenumfang der Durchgangsöffnung 8 entsteht. Daraufhin wird die Lagerplatte 5 wieder von der Lagerwelle 3 gelöst und erneut aufgesteckt.

Unterhalb des Lagergehäuses 2 ist eine Axialsicherung 10 (hier ein Sprengring) angeordnet, der ein axiales Hineinrutschen eines unteren Abschnitts 11 der Lagerwelle 3 nach oben in das Lagergehäuse 2 hinein verhindert. Die Axialsicherung 10 ist dabei in dem gezeigten Ausführungsbeispiel in einer Umfangsnut des unteren Abschnitts 11 gehalten.

Wie weiterhin aus Fig. 1 zu erkennen ist, liegt die Lagerplatte 5 im montieren Zustand auf einem am Lagergehäuse 2 vorgesehenen, umlaufenden Kragen 13 auf. Auf der dem Kragen 13 gegenüberliegenden oberen Seite der Lagerplatte 5 sind Sicherungsmittel 14 vorgesehen, die in dem gezeigten Ausführungsbeispiel einen Sicherungsring 16 umfassen, der in einer Umfangsnut 15 im oberen Abschnitt 4 der Lagerwelle 3 angeordnet ist. Mit seiner unteren Stirnseite liegt der Sicherungsring 16 unmittelbar auf der Lagerplatte 5 auf. Mit seiner in der Zeichnungsebene oberen Stirnseite 17, bzw. mit einem radial inneren Abschnitt der Stirnseite 17, liegt der Sicherungsring 16 an einer in Fig. 1 nicht zu erkennenden, abgeschrägten Umfangsnutwand an, wobei die Umfangsnutwand nicht parallel zur Oberseite der Lagerplatte 5 verläuft, sondern gegenüber dieser angeschrägt ist, derart, dass, falls auf die Lagerwelle 3 Axialkräfte in Pfeilrichtung 18 wirken, der Sicherungsring 16 aus der Umfangsnut 15 radial herausgedrückt wird, so dass sich der obere Abschnitt 4 der Lagerwelle 3 in das Gehäuse 2 hineinbewegen kann.

In Fig. 2 ist eine mögliche Ausbildung der Durchgangsöffnung 8 der Lagerplatte 5 gezeigt. In dem gezeigten Ausführungsbeispiel ist der Innenumfang der Durchgangsöffnung 8 formkongruent zum Rändelabschnitt 9 des oberen Abschnitts 4 der Lagerwelle 3 gemäß Fig. 1 ausgeformt.

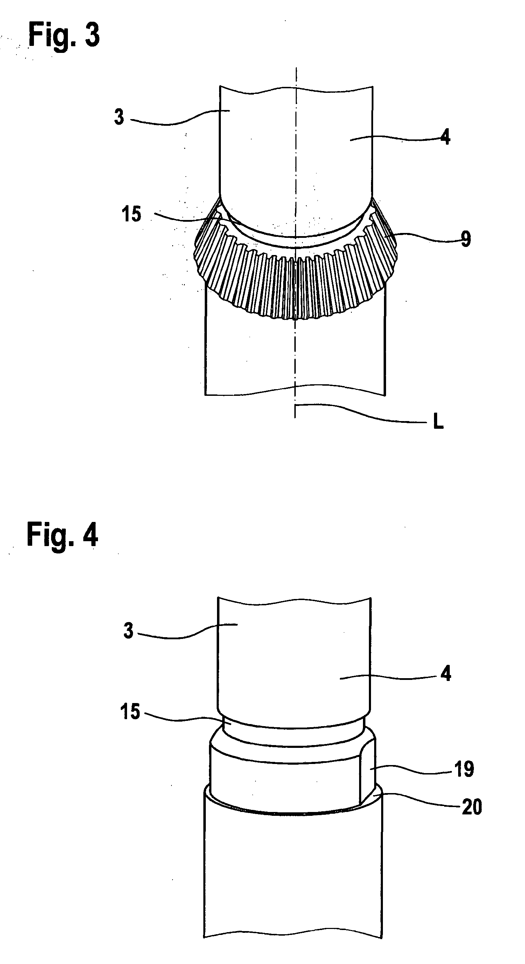

In Fig. 3 ist eine im Vergleich zu Fig. 1 alternative Ausgestaltung des oberen Abschnitts 4 der Lagerwelle 3 gezeigt. Der Rändelabschnitt 9 erstreckt sich nicht mehr parallel zur Längsmittelachse L der Lagerwelle 3, sondern verjüngt sich konisch in Richtung des oberen freien Endes der Lagerwelle 3. Bei einer derartigen Ausführungsform kann auf den in Fig. 1 gezeigten Kragen 13 verzichtet werden. Selbstverständlich muss die Durchgangsöffnung 8 in der Lagerplatte 5 formkongruent, also mit sich verjüngendem Querschnitt, ausgebildet sein.

In Fig. 4 ist eine weitere alternative Ausführungsform einer Lagerwelle 3 gezeigt. Zu erkennen ist, dass diese einen Mehrkantabschnitt 19 zum drehfesten Festlegen der Lagerplatte 5 aufweist. Unmittelbar unterhalb des Mehrkantabschnittes 19 weist die Lagerwelle 3 eine Durchmesserstufe 20 auf, auf der im montierten Zustand die Lagerplatte 5 aufliegen kann.

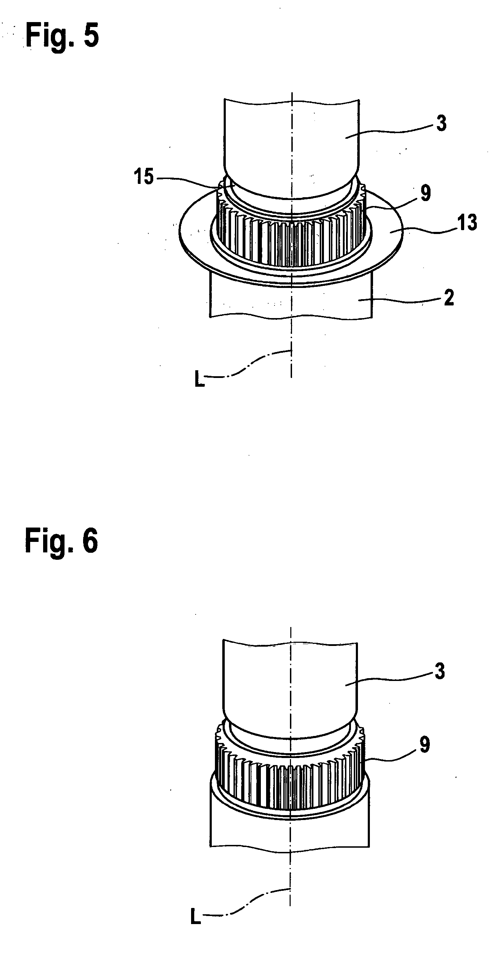

In Fig. 5 ist die Lagerwelle 3 gemäß Fig. 1 ohne Lagerplatte 5 gezeigt. Zu erkennen ist der am Lagergehäuse 2 angeordnete Kragen 13 und der koaxial verlaufende Rändelabschnitt 9 mit darüber angeordneter Umfangsnut 15.

In Fig. 6 ist die Lagerwelle 3 gemäß Fig. 5 in Alleinstellung ohne Lagergehäuse gezeigt, wobei sich der Rändelabschnitt parallel zur Längsmittelachse L der Lagerwelle 3 erstreckt.

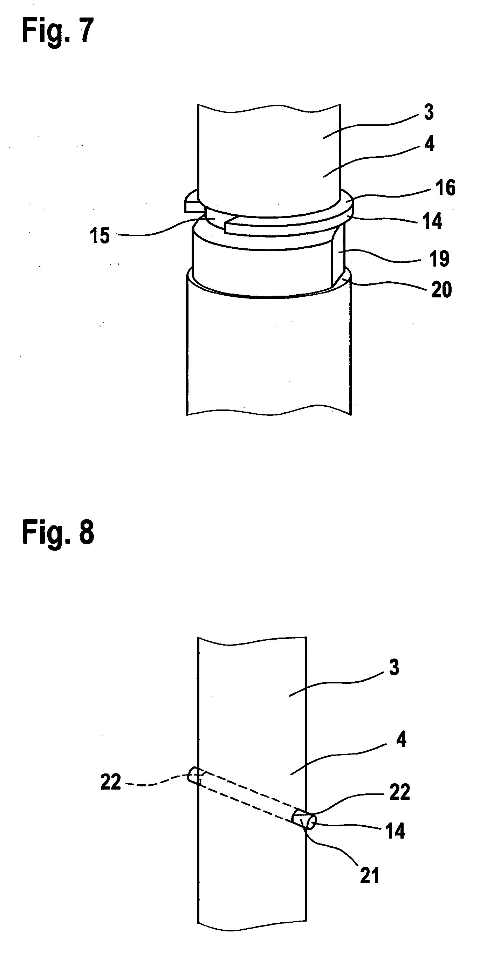

In Fig. 7 ist eine Lagerwelle 3 gezeigt, in deren oberen Abschnitt 4 eine Umfangsnut 15 eingebracht ist, in der ein Sicherungsring 16 der Sicherungsmittel 14 gehalten ist. Unmittelbar unterhalb des Sicherungsring 14 befindet sich ein Mehrkantabschnitt 19 mit zwei parallelen Abplattungen, wobei unmittelbar unterhalb des Mehrkantabschnitts 19 eine Durchmesserstufe 20 zur Auflage der nicht gezeigten Lagerplatte 5 vorgesehen ist.

In Fig. 8 sind lediglich exemplarisch Sicherungsmittel 14 gezeigt, die einen Bolzen 21 umfassen, der die Lagerwelle 3, genauer den oberen Abschnitt 4 der Lagerwelle 3, in Querrichtung durchsetzt. Im montierten Zustand liegt der Bolzen 21 mit seiner Unterseite auf der Lagerplatte auf. Sollbruchstellen 22 in den äußeren Endbereichen des Bolzens 21 brechen bei Überschreiten einer maximal zulässigen Axialkraft, woraufhin sich der obere Abschnitt 4 der Lagerwelle 3 in das nicht gezeigte Lagergehäuse hineinbewegen kann.

## Patentansprüche

1. Wischerlager mit einer abschnittsweise in einem Lagergehäuse (2) aufgenommenen Lagerwelle (3), deren einen Befestigungsbereich (7) zum Festlegen eines Wischerarms aufweisender oberer Abschnitt (4) aus dem Lagergehäuse (2) herausragt, wobei mit dem oberen Abschnitt (4) der Lagerwelle (3) eine zusammen mit der Lagerwelle (3) eine Antriebskurbel bildende Lagerplatte (5) drehfest verbunden ist, wobei der obere Abschnitt (4) der Lagerwelle (3) mit Sicherungsmitteln (14) gegen eine axiale Relativbewegung zur Lagerplatte (5) in Richtung des Lagergehäuses (2) gesichert ist, wobei die Sicherungsmittel (14) derart ausgebildet und/oder angeordnet sind, dass diese bei Überschreiten einer vorgegebenen maximalen, auf die Lagerwelle (3) wirkenden Axialkraft eine relative Axialbewegung des oberen Abschnitts (4) der Lagerwelle (3) in Richtung des Lagergehäuses (2) ermöglichen, wobei ein unterer, aus dem Lagergehäuse (2) herausragender Abschnitt (11) der Lagerwelle (3) mithilfe von weiteren Sicherungsmitteln (10) gegen eine axiale Relativbewegung in Richtung des Lagergehäuses (2) gesichert ist,
**dadurch gekennzeichnet,**
**dass** die Lagerwelle (3) eine Durchmesserstufe (20) aufweist, die derart an der Lagerwelle (3) angeordnet ist, dass die Lagerplatte (5) auf der Durchmesserstufe (20) aufliegt und

2. Wischerlager nach Anspruch 1, **dadurch gekennzeichnet; dass** die Sicherungsmittel (14) in einem Bereich axial zwischen dem Befestigungsbereich (7) zum Festlegen des Wischerarms und der Lagerplatte (5) angeordnet sind, vorzugsweise derart, dass die auf der Lagerplatte (5) aufliegen.

3. Wischerlager nach einem der vorhergehenden Ansprüche, **dadurch gekennzeichnet, dass** die Lagerplatte (5) mittels einer, vorzugsweise ausschließlich, formschlüssigen Verbindung drehfest mit dem oberen Abschnitt (4) der Lagerwelle (3) verbunden ist.

4. Wischerlager nach Anspruch 3, **dadurch gekennzeichnet, dass** die formschlüssige Verbindung derart ausgebildet ist, dass sie, zumindest näherungsweise, keine einer axialen Verstellbewegung des oberen Abschnitts (4) der Lagerwelle (3) in Richtung des Lagergehäuses (2) entgegenwirkenden Haltekräfte verursacht.

5. Wischerlager nach Anspruch 3 oder 4, **dadurch gekennzeichnet, dass** die formschlüssige Verbindung einen Mehrkantabschnitt (19) oder einen Rändelabschnitt (9) des oberen Abschnitts (4) der Lagerwelle (3) umfasst, der mit einer formkongruent konturierten Durchgangsöffnung (8) der Lagerplatte (5) drehmomentübertragend zusammenwirkt.

6. Wischerlager nach Anspruch 5, **dadurch gekennzeichnet, dass** sich der Mehrkantabschnitt (19) oder der Rändelabschnitt (9), zumindest in einem Axialabschnitt, in Richtung des oberen Endes der Lagerwelle (3) verjüngend ausgebildet ist.

7. Montageverfahren zur Montage eines Wischerlagers (1) nach einem der vorhergehenden Ansprüchen, wobei der obere Abschnitt (4) der Lagerwelle (3) mit Sicherungsmitteln (14) gegen eine axiale Relativbewegung zur Lagerplatte (5) in Richtung des Lagergehäuses (2) gesichert wird, wobei die Sicherungsmittel (14) derart ausgebildet und/oder angeordnet werden, dass diese bei Überschreiten einer vorgegebenen maximalen, auf die Lagerwelle (3) wirkenden, Axialkraft eine relative Axialbewegung des oberen Abschnitts (4) der Lagerwelle (3) in Richtung des Lagergehäuses (2) ermöglichen, wobei ein unterer, aus dem Lagergehäuse (2) herausragender Abschnitt (11) der Lagerwelle (3) mithilfe von weiteren Sicherungsmitteln (10) gegen eine axiale Relativbewegung in Richtung des Lagergehäuses (2) gesichert wird
**dadurch gekennzeichnet,**
**dass** an der die Lagerwelle (3) eine Durchmesserstufe (20) vorgesehen wird, auf der die Lagerplatte (5) in montiertem Zustand aufliegt und
**dass** die Sicherungsmittel (14) einen, vorzugsweise senkrecht zur Lagerwellenlängsmittelachse verlaufenden, Bolzen (21) und/oder eine Speednut aufweisen, der/die mit mindestens einer Sollbruchstelle (22) versehen sind/ist.

8. Montageverfahren nach Anspruch 7, **dadurch gekennzeichnet**, das die Lagerplatte (5) derart drehfest mit dem oberen Abschnitt (4) der Lagerwelle (3) verbunden wird, dass die drehfeste Verbindung, zumindest näherungsweise, keine einer axialen Verstellbewegung des oberen Abschnitts (4) der Lagerwelle (3) in Richtung des Lagergehäuses (2) entgegen wirkenden Haltekräfte verursacht.

9. Montageverfahren nach Anspruch 8, **dadurch gekennzeichnet, dass** die Lagerplatte (5) zunächst auf den oberen Abschnitt (4) der Lagerwelle (3) aufgepresst, wieder gelöst und dann wieder montiert wird.

## Claims

1. Wiper bearing with a bearing shaft (3) which is partially accommodated in a bearing housing (2) and the upper section (4) of which, which section has a fastening region (7) for the securing of a wiper arm, projects out of the bearing housing (2), wherein a bearing plate (5) forming a drive crank together with the bearing shaft (3) is connected to the upper section (4) of the bearing shaft (3) for rotation therewith, wherein the upper section (4) of the bearing shaft (3) is secured against an axial relative movement with respect to the bearing plate (5) in the direction of the bearing housing (2) by securing means (14), wherein the securing means (14) are designed and/or arranged in such a manner that, when a predetermined maximum axial force acting on the bearing shaft (3) is exceeded, said securing means permit a relative axial movement of the upper section (4) of the bearing shaft (3) in the direction of the bearing housing (2), wherein a lower section (11) of the bearing shaft (3), which section projects out of the bearing housing (2), is secured against an axial relative movement in the direction of the bearing housing (2) with the aid of further securing means (10), **characterized in that** the bearing shaft (3) has a diameter step (20) which is arranged on the bearing shaft (3) in such a manner that the bearing plate (5) rests on the diameter step (20), and, **in that** the securing means (14) have a bolt (21) and/or a speed nut, preferably running perpendicularly to the longitudinal centre axis of the bearing shaft, which are/is provided with at least one predetermined breaking point (22).

2. Wiper bearing according to Claim 1, **characterized in that** the securing means (14) are arranged axially in a region between the fastening region (7) for fixing the wiper arm and the bearing plate (5), preferably in such a manner that the securing means rest on the bearing plate (5).

3. Wiper bearing according to either of the preceding claims, **characterized in that** the bearing plate (5) is connected to the upper section (4) of the bearing shaft (3) for rotation therewith by means of a, preferably exclusively, form-fitting connection.

4. Wiper bearing according to Claim 3, **characterized in that** the form-fitting connection is designed in such a manner that said connection does not cause at least approximately any retaining forces which counteract axial adjustment movement of the upper section (4) of the bearing shaft (3) in the direction of the bearing housing (2).

5. Wiper bearing according to Claim 3 or 4, **characterized in that** the form-fitting connection comprises a polygonal section (19) or a knurled section (9) of the upper section (4) of the bearing shaft (3), which polygonal section or knurled section interacts in a torque-transmitting manner with a shape-congruently-contoured through opening (8) in the bearing plate (5).

6. Wiper bearing according to Claim 5, **characterized in that** the polygonal section (19) or the knurled section (9) is of tapering design, at least in an axial section, in the direction of the upper end of the bearing shaft (3).

7. Installation method for installing a wiper bearing (1) according to one of the preceding claims, wherein the upper section (4) of the bearing shaft (3) is secured against an axial relative movement with respect to the bearing plate (5) in the direction of the bearing housing (2) by securing means (14), wherein the securing means (14) are designed and/or arranged in such a manner that, when a predetermined maximum axial force acting on the bearing shaft (3) is exceeded, said securing means permit a relative axial movement of the upper section (4) of the bearing shaft (3) in the direction of the bearing housing (2), wherein a lower section (11) of the bearing shaft (3), which section projects out of the bearing housing (2), is secured against an axial relative movement in the direction of the bearing housing (2) with the aid of further securing means (10), **characterized in that** a diameter step (20), on which the bearing plate (5) rests in the fitted state, is provided on the bearing shaft (3), and **in that** the securing means (14) have a bolt (21) and/or a speed nut, preferably running perpendicularly to the longitudinal centre axis of the bearing shaft, which are/is provided with at least one predetermined breaking point (22).

8. Installation method according to Claim 7, **characterized in that** the bearing plate (5) is connected to the upper section (4) of the bearing shaft (3) for rotation therewith in such a manner that the rotationally fixed connection does not cause at least approximately any retaining forces which counteract an axial adjustment movement of the upper section (4) of the bearing shaft (3) in the direction of the bearing housing (2).

9. Installation method according to Claim 8, **characterized in that** the bearing plate (5) is first of all pressed onto the upper section (4) of the bearing shaft (3), is released again and is then refitted.

## Revendications

1. Palier d'essuie-glace comprenant un arbre de palier (3) reçu en partie dans un boîtier de palier (2), dont la portion supérieure (4) présentant une région de fixation (7) pour la fixation d'un bras d'essuie-glace fait saillie hors du boîtier de palier (2), une plaque de palier (5), formant conjointement avec l'arbre de palier (3) une manivelle d'entraînement, étant connectée de manière solidaire en rotation à la portion supérieure (4) de l'arbre de palier (3), la portion supérieure (4) de l'arbre de palier (3) étant fixée avec des moyens de fixation (14) à l'encontre d'un mouvement relatif axial par rapport à la plaque de palier (5) dans la direction du boîtier de palier (2), les moyens de fixation (14) étant réalisés et/ou disposés de telle sorte que lors d'un dépassement d'une force axiale prédéfinie maximale agissant sur l'arbre de palier (3), ceux-ci permettent un mouvement axial relatif de la portion supérieure (4) de l'arbre de palier (3) dans la direction du boîtier de palier (2), une portion inférieure (11) de l'arbre de palier (3), faisant saillie hors du boîtier de palier (2), étant fixée à l'aide de moyens de fixation supplémentaires (10) à l'encontre d'un mouvement relatif axial dans la direction du boîtier de palier (2),
**caractérisé en ce que**
l'arbre de palier (3) présente un épaulement de diamètre (20) qui est disposé sur l'arbre de palier (3) de telle sorte que la plaque de palier (5) repose sur l'épaulement de diamètre (20), et **en ce que** les moyens de fixation (14) présentent un boulon (21) s'étendant de préférence perpendiculairement à l'axe médian longitudinal de l'arbre de palier et/ou un écrou rapide, qui est/sont pourvus d'au moins une zone destinée à la rupture (22).

2. Palier d'essuie-glace selon la revendication 1, **caractérisé en ce que** les moyens de fixation (14) sont disposés dans une région axialement entre la région de fixation (7) pour la fixation du bras d'essuie-glace et la plaque de palier (5), de préférence de telle sorte qu'ils reposent sur la plaque de palier (5).

3. Palier d'essuie-glace selon l'une quelconque des revendications précédentes, **caractérisé en ce que** la plaque de palier (5) est connectée au moyen, de préférence exclusivement, d'une connexion par engagement par correspondance de formes, de manière solidaire en rotation à la portion supérieure (4) de l'arbre de palier (3).

4. Palier d'essuie-glace selon la revendication 3, **caractérisé en ce que** la connexion par engagement par correspondance de formes est réalisée de telle sorte qu'elle ne provoque au moins approximativement aucune force de retenue agissant à l'encontre d'un déplacement de réglage axial de la portion supérieure (4) de l'arbre de palier (3) dans la direction du boîtier de palier (2).

5. Palier d'essuie-glace selon la revendication 3 ou 4, **caractérisé en ce que** la connexion par engagement par correspondance de formes comprend une portion polygonale (19) ou une portion moletée (9) de la portion supérieure (4) de l'arbre de palier (3), qui coopère par transmission de couple avec une ouverture de passage de la plaque de palier (5) ayant un contour de forme adaptée (8).

6. Palier d'essuie-glace selon la revendication 5, **caractérisé en ce que** la portion polygonale (19) ou la portion moletée (9), au moins dans une portion axiale, sont réalisées en se rétrécissant dans la direction de l'extrémité supérieure de l'arbre de palier (3).

7. Procédé de montage pour le montage d'un palier d'essuie-glace (1) selon l'une quelconque des revendications précédentes, dans lequel la portion supérieure (4) de l'arbre de palier (3) est fixée avec des moyens de fixation (14) à l'encontre d'un mouvement relatif axial par rapport à la plaque de palier (5) dans la direction du boîtier de palier (2), les moyens de fixation (14) étant réalisés et/ou disposés de telle sorte que lors du dépassement d'une force axiale prédéfinie maximale agissant sur l'arbre de palier (3), ils permettent un mouvement axial relatif de la portion supérieure (4) de l'arbre de palier (3) dans la direction du boîtier de palier (2), une portion inférieure (11) de l'arbre de palier (3), faisant saillie hors du boîtier de palier (2), étant fixée à l'aide de moyens de fixation supplémentaires (10) à l'encontre d'un mouvement relatif axial dans la direction du boîtier de palier (2),
**caractérisé en ce**
**qu'**un épaulement de diamètre (20) est prévu sur l'arbre de palier (3), sur lequel la plaque de palier (5) repose dans l'état monté, et en ce que les moyens de fixation (14) présentent un boulon (21) s'étendant de préférence perpendiculairement à l'axe médian longitudinal de l'arbre de palier et/ou un écrou rapide, qui est/sont pourvus d'au moins une zone destinée à la rupture (22).

8. Procédé de montage selon la revendication 7, **caractérisé en ce que** la plaque de palier (5) est connectée de manière solidaire en rotation à la portion supérieure (4) de l'arbre de palier (3) de telle sorte que la connexion solidaire en rotation ne provoque au moins approximativement aucune force de retenue agissant à l'encontre d'un déplacement de réglage axial de la portion supérieure (4) de l'arbre de palier (3) dans la direction du boîtier de palier (2).

9. Procédé de montage selon la revendication 8, **caractérisé en ce que** la plaque de palier (5) est d'abord pressée sur la portion supérieure (4) de l'arbre de palier (3), est à nouveau desserrée et est ensuite à nouveau montée.
